# EUROPÄISCHE PATENTSCHRIFT

(11) **EP 2 305 563 B1**
(45) Veröffentlichungstag und Bekanntmachung des Hinweises auf die Patenterteilung: **29.06.2016**
(21) Anmeldenummer: 10008495.3
(22) Anmeldetag: 14.08.2010
(51) Int. Cl.: B65B 13/02

(54) **Verfahren und Vorrichtung zur Herstellung von Gebinden**
Method and device for producing containers
Procédé et dispositif destinés à la fabrication de fûts

(30) Priorität: 10.09.2009 DE 102009040700
(43) Veröffentlichungstag der Anmeldung: 06.04.2011
(73) Patentinhaber: Krones AG, 93073 Neutraubling (DE)
(72) Erfinder: Perl, Kurt, 93073 Neutraubling (DE)
(74) Vertreter: Benninger, Johannes

(56) Entgegenhaltungen:
- EP-A1- 0 675 042
- EP-A1- 0 844 192
- WO-A1-2005/090164
- DE-A1- 4 024 149
- DE-A1- 4 417 429
- DE-U1-202008 005 594
- US-A- 3 714 756

## Beschreibung

Die vorliegende Erfindung betrifft ein Verfahren zur Herstellung von Gebinden mit den Merkmalen des Anspruchs 1. Die Erfindung betrifft weiterhin eine Vorrichtung zur Handhabung, Förderung, Verpackung und/oder Palettierung von Artikeln mit den Merkmalen des Oberbegriffs des unabhängigen Anspruchs 7.

Es sind verschiedene Möglichkeiten bekannt, einzelne Artikel zu größeren Gebinden zusammenzufassen. So werden bspw. Getränkebehälter meist mittels Schrumpffolien zu Gebinden von vier, sechs oder mehr Behältern zusammengefasst und verpackt. Die Herstellung von Gebinden ist meist unumgänglich, da sie die häufigste Variante von Verkaufseinheiten für Getränkebehälter und Flaschen aus PET-Kunststoff darstellt. Die Gebinde werden für den Transport teilweise nochmals zusammengefasst und/oder in Lagen zusammengestellt und palettiert.

Die zur Herstellung von bekannten Gebinden verwendeten Schrumpffolien benötigen bestimmte Fertigungsschritte, die einen relativ hohen Energiebedarf haben. Zudem verursacht die verwendete Folie Kosten zur Herstellung, zur Bereitstellung, zur Handhabung sowie zur späteren Entsorgung, da sie nach dem Verkauf nicht mehr benötigt wird. Auch die Maschinenausstattung zur Bereitstellung der sog. Folieneinschlagmodule und anderer Handhabungsstationen verursacht hohe Investitionskosten. Schließlich ist auch für die Bereitstellung des sog. Schrumpftunnels, bei dem die um die Gebinde geschlagene Folie mittels Heißluftbeaufschlagung um die Flaschen geschrumpft wird, ein relativ hoher Kapitaleinsatz erforderlich.

Dokument US3714756 offenbart ein Verfahren zur Herstellung von Gebinden und eine Vorrichtung gemäß der Oberbegriff des Anspruchs 7.

Ein Ziel der vorliegenden Erfindung besteht darin, eine kostengünstige und einfach handhabbare Möglichkeit zur Herstellung von Gebinden zur Verfügung zu stellen, welche die genannten Nachteile des Standes der Technik zumindest teilweise vermeidet.

Dieses Ziel der Erfindung wird mit den Gegenständen der unabhängigen Patentansprüche erreicht, wobei sich Merkmale vorteilhafter Weiterbildungen der Erfindung aus den jeweiligen abhängigen Ansprüchen ergeben.

Die Erfindung betrifft ein Verfahren zur Herstellung von Gebinden aus jeweils wenigstens zwei miteinander verbundenen Artikeln, die mit einer horizontal um die Außenseiten der Artikel gespannten Umreifung zusammengehalten werden, die während eines ununterbrochenen Förderprozesses um die Artikel gelegt und anschließend fixiert wird. Während der Aufbringung der Umreifung werden die Artikel nicht angehalten, da die Umreifung erfindungsgemäß in einem kontinuierlichen Prozess während der ununterbrochenen Förderung der Artikel um diese aufgebracht wird. Vorzugsweise wird die Umreifung durch wenigstens ein um die Außenseiten der Artikel gespanntes und anschließend unter Vorspannung an seinen Enden verbundenes Band gebildet. Selbstverständlich können auch zwei oder mehr parallel verlaufende Bänder die Umreifung bilden. So kann die Umreifung auch durch ein, zwei oder mehr Bänder aus Seilmateriäl, Draht, Kunststoff, Metall, Papier oder aus einem Verbundmaterial gebildet werden, die an ihren Enden verklebt, verschweißt, verklammert, verknotet oder anderweitig verbunden werden.

Das Aufbringen der Umreifung kann auf unterschiedliche Weise erfolgen. So kann die Umreifung beispielsweise mit einem von oben über die auf einer Horizontalfördereinrichtung stehenden und in horizontaler Richtung bewegten Artikel geschobenen und sich synchron mit der Vorschubgeschwindigkeit der Horizontalfördereinrichtung mitbewegenden Umreifungseinrichtung aufgebracht werden. Die Umreifungseinrichtung kann wahlweise einen Portal- oder Knickarmroboter mit Umreifungskopf umfassen, der sich beim Aufbringen der Umreifung in vertikaler Richtung über die Artikel bewegt und gleichzeitig in horizontaler Förderrichtung der Artikel mit diesen mitbewegt wird. Wahlweise kann sich die Umreifungseinrichtung auch in ortsfester Lage befinden, wobei je zwei separate Bänder mit Vorratsspulen so angeordnet sind, dass sie in der Mitte verbunden werden können, so dass sich ein horizontales Band quer zur Laufrichtung der Gebinde spannt. In dieses gespannte Band fährt dann kontinuierlich das Gebinde ein und zwar so weit, bis sich die Hinterkante der Formation in der Flucht mit der ehemals geraden Bandlinie befindet. Die Bewegung der Gebindeformation in Laufrichtung erzwingt dadurch eine Weiterförderung der Bänder aus ihren Vorratsspulen, so dass die Formation nun von drei Seiten umschlossen ist. Ggf. können diese Spulen auch einen eigenen Antrieb aufweisen und bspw. durch Lichtschranken gesteuert werden.

Weiterhin kann vorgesehen sein, dass die Umreifungseinrichtung die als Gebinde verbundenen Artikel nach dem Aufbringen der Umreifung auf der Oberfläche der Horizontalfördereinrichtung zur Ausrichtung gegenüber anderen Gebinden und zur anschließenden Ausbildung von Palettenlagen und/oder zur Vorbereitung einer nachfolgenden Palettierung verschiebt oder dreht. Auf diese Weise kann die Umreifungseinrichtung in vorteilhafter Weise einen Teil einer Gruppierungseinrichtung bilden und für eine gewünschte Gruppierung der Gebinde vor deren Palettierung oder anderweitiger Ablage sorgen.

Eine weitere Ausführungsvariante des erfindungsgemäßen Verfahrens kann vorsehen, dass während oder nach dem Aufbringen der Umreifung ein Tragegriff an der Außenseite des Gebindes und/oder an den Umreifungen aufgebracht und fixiert wird. Dieser Tragegriff kann ggf. zur zusätzlichen Lagestabilisierung der Gebindeformation beitragen, so dass sich die Getränkebehälter in geringerem Ausmaß gegeneinander verschieben können.

Weiterhin betrifft die Erfindung eine Vorrichtung zur Handhabung, Förderung, Verpackung und/oder Palettierung von Artikeln. Die Vorrichtung umfasst wenigstens eine Horizontalfördereinrichtung zur kontinuierlichen Beförderung der Artikel, eine Vorrichtung zur Bildung von Gebinden aus wenigstens zwei gruppierten und miteinander verbundenen Artikeln sowie eine nachgeordnete Gruppiervorrichtung zur Ausrichtung der Gebinde gegenüber anderen Gebinden und zur anschließenden Ausbildung von Palettenlagen und/oder zur Vorbereitung einer nachfolgenden Palettierung. Die Vorrichtung zur Bildung von Gebinden umfasst erfindungsgemäß eine Umreifungseinrichtung zur Aufbringung einer horizontal um die Außenseiten von wenigstens zwei miteinander zu verbindenden Artikeln gespannten Umreifung. Die Umreifungseinrichtung ist der Horizontalfördereinrichtung und/oder der nachfolgenden Gruppiervorrichtung zugeordnet oder kann integraler Bestandteil der Horizontalfördereinrichtung und/oder der Gruppiervorrichtung sein. Wahlweise kann die Umreifungseinrichtung einen Portal- oder Knickarmroboter mit Umreifungskopf umfassen, der beim Aufbringen der Umreifung in vertikaler Richtung über die Artikel bewegbar und gleichzeitig in horizontaler Förderrichtung der Artikel mit diesen mitbewegbar ist.

Die Bänder können wahlweise aus geeignetem Kunststoff-, Metall- oder Verbundmaterial bestehen. Besonders vorteilhaft lässt sich ein wiederverwertbares Material einsetzen, das bspw. aus sörtenreinem Kunststoff oder aus einem definierten Metall besteht. Ggf. lässt sich auch biologisch abbaubares Material einsetzen. Die Positionierung der Bänder auf den Gebinden lässt sich wahlweise mechanisch oder mittels Luftdruckunterstützung durchführen. So sind Varianten denkbar, bei denen das Band über Teile seines Transportweges mittels Luftdruck befördert wird, so dass es sich weitgehend selbständig in die gewünschte Lage um das Gebinde legt und zur Unterstützung mechanisch geführt wird.

Als Vorteile der Erfindung gegenüber bekanntem Stand der Technik sind u.a. zu nennen, dass die Umreifungsbänder günstiger als eine Folie sind. Es ist kein Schrumpftunnel erforderlich, wodurch eine hohe Energieeinsparung und eine Reduzierung der Investitionskosten möglich sind. Bei einer Zusammenstellung der Module, einer sog. Blockung, ist eine geringere Aufstellfläche erforderlich. Es können zudem nicht wertschöpfende Funktionen wie Transportieren, Fördern o. dgl. reduziert werden. Weiterhin ermöglicht die Erfindung eine Vermeidung von Anlagenstillstandszeiten und eine Erhöhung des Wirkungsgrades. Ein modularer Aufbau der einzelnen Anlagenteile durch deren Modulbauweise ermöglicht es, die Losgrößen in der Produktion zu erhöhen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivdarstellung eines Einteilsystems sowie einen Übergang auf ein Transportband für lineare Behälterformationen.
Fig. 2 zeigt eine schematische Perspektivdarstellung einer Behältereinteilung und zweier Umreifungsmodule für einen zweibahnigen Betrieb.
Fig. 3 zeigt eine weitere Ansicht der Darstellung gemäß Fig. 2.
Fig. 4 zeigt eine Draufsicht auf die Anlage gemäß Fig. 3.
Fig. 5 zeigt eine weitere Draufsicht auf die Anlage mit ausgeblendetem Grundgestell.
Fig. 6 zeigt eine weitere perspektivische Ansicht auf die Anlage mit ausgeblendetem Grundgestell.
Fig. 7 zeigt eine perspektivische Darstellung einer Anlage mit direkter Blockung der Umreifungsanlage mit einer Gruppierstation einer Palettieranlage.
Fig. 8 zeigt eine perspektivische Darstellung einer alternativen Umreifungsanlage mit ortsfest gelagerten Umreifungsspulen.
Fig. 9 zeigt in vier aufeinander folgenden Darstellungen die Prozessschritte beim Herstellen eines Gebindes mit einer Umreifungsanlage gemäß Fig. 8.

Die folgenden detaillierten Beschreibungen möglicher Ausführungsformen der Erfindung dienen als nicht einschränkende Beispiele und nehmen auf die beigefügten Zeichnungen Bezug. Gleiche Bauteile weisen dabei grundsätzlich gleiche Bezugszeichen auf und werden teilweise nicht mehrfach erläutert.

Bei dem nachfolgend beschriebenen Verfahren werden Gebinde bzw. Verkaufseinheiten durch Umreifen von Behältern mit Hilfe von Schnüren, Bändern aus unterschiedlichsten Materialien, wie z.B. Papier, Kunststoff, Metall, Gummi etc. von starrer oder flexibler Art gebildet. Im Nachfolgenden ist eine Möglichkeit beschrieben, wie aus der Paketumreifung manuell mit Produkten beschickte UmreifungsApplikatoren in die Maschinentechnik von Verpackungslinien integriert werden können. Grundsätzlich sind mit der aufgezeigten Verbindungsart "Behälterumreifen" alle denkbaren geometrischen Anordnungen der Behälter möglich: Lineare Matrixanordnung in einer n x m-Anordnung von Zeilen und Spalten für runde oder rechteckige, quadratische oder andere Behälter sowie z.B. Kugelpackungen im 30°- bzw. 60°-Winkel bei runden Artikeln in beliebiger Anzahl. Die Anordnung der Gebinde oder Behälter ist abhängig von der Zuführung der Behälter durch den sogenannten Behältereinteiler.

Die der Erfindung zu Grunde liegende Idee beruht auf der Integration von Umreifungsapplikatoren in Verpackungslinien, bspw. in einer der nachfolgend beschriebenen Weise. Die zu umreifenden Behälter (rund, rechteckig oder Formbehälter) werden durch Behälterzuläufe in Gassen eingeteilt und einer Behälter-Formationseinheit, z.B. einem Kulisseneinteiler, zugeführt. Die Behälterformationseinheit bildet aus den in Gassen zugeführten Behältern Behältergruppen, die auf einem Transportband der Umreifungszone zugeführt werden. Für lineare Formationen erfolgt der Transport der Behälter auf dem Transportband ohne Geländer und Schubbalken. Für schwierig zu verarbeitende Produkte oder bei diagonal versetzten Gebindeanordnungen erfolgt der Transport der Behälter nach dem Einteilet durch Schubbalken und Geländer durch die Umreifungszone. Diagonal versetzte Behälteranordnungen im Gebinde, sogenannte Kugelpackungen, werden durch Aufsätze auf den Schubbalken erzeugt.

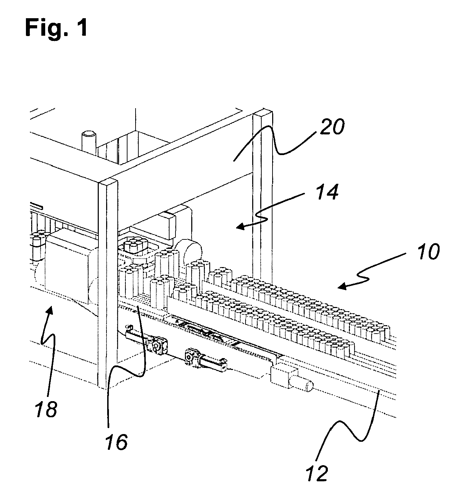

Die schematische Darstellung der Fig. 1 zeigt ein Einteilsystem 10 und den Übergang auf ein Transportband 12 für lineare Behälterformationen. Nachdem gewünschte Gebindeformationen 14 durch einen Behältereinteiler gebildet und die Formationen 14 durch den Einteiler auf einen definierten Abstand gebracht wurden, durchlaufen die gruppierten Behälterformationen 14 auf einem Transportband 16 ohne Relativbewegung zwischen Band und Formation die sogenannte Umreifungszone 18. Die Umreifungszone 18 besteht aus minimal einem Umreifungsroboter, nachfolgend auch als Umreifungsmodul 20 bezeichnet, oder aus einer je nach geforderter Linienleistung beliebigen Anzahl nacheinander geschalteter Umreifungsmodule 20. Die Verarbeitung bzw. Umreifung der Behälterformationen in den Umreifungsmodulen 20 kann einbahnig oder mehrbahnig erfolgen.

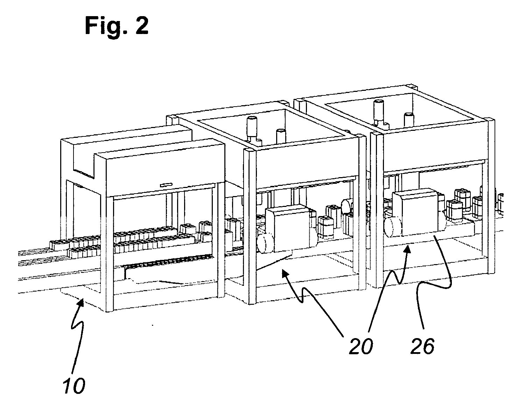

In der Fig. 2 sind eine Behältereinteilung 10 und zwei Umreifungsmodule 20 für einen zweibahnigen Betrieb dargestellt.

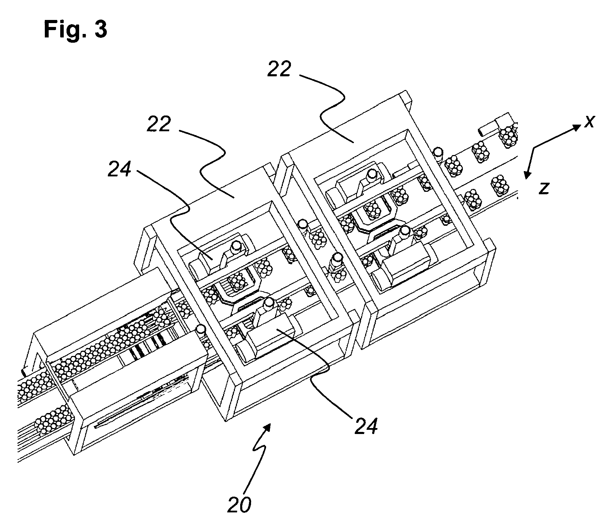

Wie weiterhin aus Fig. 3 zu ersehen ist, besteht ein Umreifungsmodul 20 aus einem Rahmen 22 bzw. Grundgestell, in das zwei X,Z-Bewegungsachsen integriert sind. An jeder X,Z-Bewegungsachse - dies sind zwei Linearachsen mit Linearführungen und Zahnriemenantrieb - ist ein sogenannter Umreifungsapplikator 24 montiert.

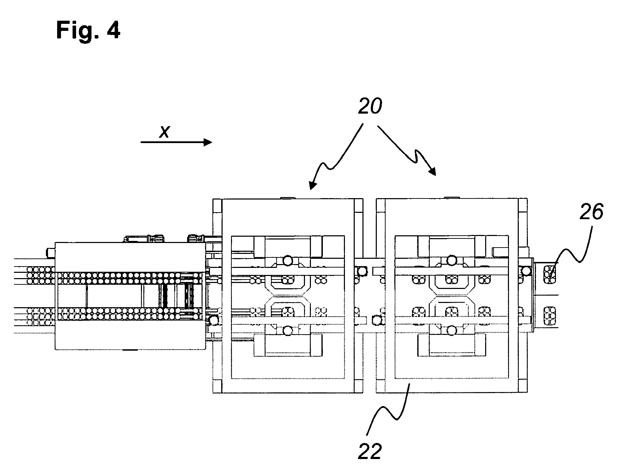

Die X-Achse des Zweiachsportals bewegt sich in Behälterförderrichtung, die Z-Achse in vertikaler Richtung; siehe dazu Fig. 4.

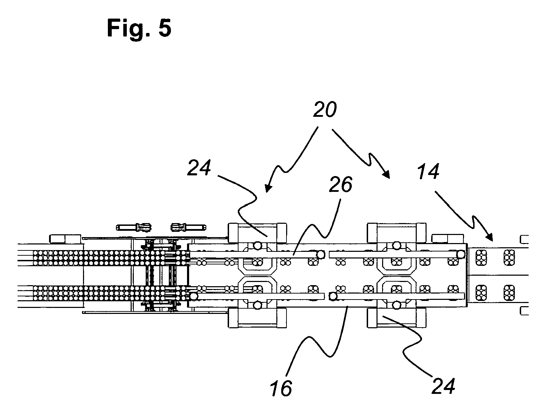

Nachfolgend ist das Verfahren zum Umreifen der Gebinde beschrieben, wobei auf die Figuren 1 bis 4 Bezug genommen wird. Die Behälterformationen 14 werden auf dem Transportband 16 durch die Umreifungsmodule 20 transportiert. Zwischen den Behälterformationen 14 besteht jeweils eine definierte Lücke. Nach dem Eintritt einer Behälterformation 14 in ein Umreifungsmodul 20 fahren die Umreifungsapplikatoren 24 mit den X,Z-Portalachsen über die jeweilige Formation 14, synchronisieren sich mit der X-Achse auf die Fördergeschwindigkeit des Transportbandes 16 und senken sich über die Z-Achse auf das Umreifungsniveau ab. Während der Umreifungsapplikationskopf 24 mit der Gebindeformation 14 mitfährt, wird die Formation mit Bändern 26 umreift, wie dies aus Fig. 5 deutlich wird. Bei der Darstellung der Fig. 5 wurde der besseren Übersichtlichkeit halber das Grundgestell ausgeblendet. Die Umreifung kann wahlweise durch ein einzelnes Band 26 gebildet sein. Idealerweise besteht die Umreifung jedoch aus mehreren beabstandet übereinander liegenden Bändern 26.

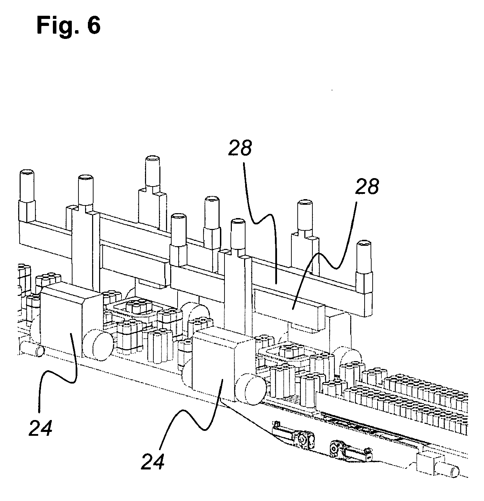

In der Fig. 6 sind Umreifungsapplikationsköpfe 24 mit zwei Umreifungseinheiten 28 übereinander dargestellt. Besteht die Umreifungsanlage aus mehreren Umreifungsmodulen 20 (hier: zwei Module dargestellt), so umreift das erste Modul eine Formationsreihe, und lässt die zweite oder gegebenenfalls n-te Formationsreihe durchlaufen. Die zweite oder n-te Formationsreihe wird dann durch das zweite oder n-te Umreifungsmodul 20 umreift. Auch bei der Darstellung der Fig. 6 ist das Grundgestell ausgeblendet.

Zur oben dargestellten Maschinentechnik sind auch alternative Ausführungsvarianten möglich. So können die Umreifungsapplikationköpfe 24 anstelle von Portalrobotern auch von Knickarmrobotern getragen'werden. Der grundsätzliche Funktionsablauf ändert sich hierdurch nicht. Diese Knickarmroboter können in beliebiger Anzahl neben dem Transportband angeordnet sein.

Eine hier nicht dargestellte Option kann eine Ausstattung des Umreifungsapplikationskopfes mit einem Applikationskopf zum Anbringen von Tragegriffen aus Kunststoffbändern sein. Diese Tragegriffe können z.B. selbstklebend ausgeführt sein.

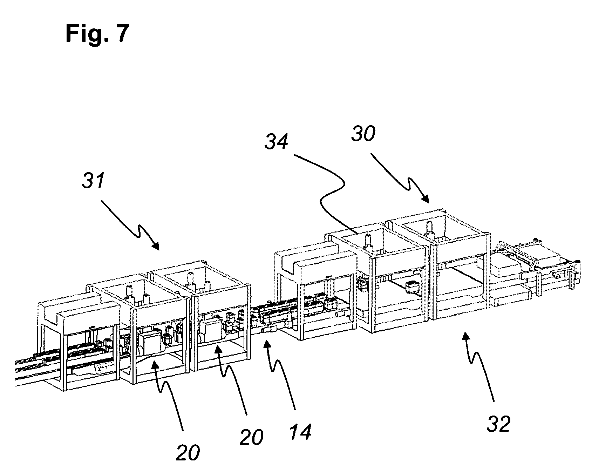

Die Umreifungsmodule eignen sich sehr gut zur Integration in Verpackungsanlagen 30. So können die Umreifungsmodule 20 mit entsprechendem Zulauf in konventionelle Verpackungs-Produktionslinien als sog. "stand-alone" - Maschinen integriert werden. Allerdings bietet sich auch die Blockung der Umreifungsmaschine 31 mit der Palettiermaschine 32 an. So zeigt die Fig. 7 eine direkte Blockung der Umreifungsanlage 31 mit der Gruppierstation 34 einer Palettiermaschine 32. Aus der Umreifungsanlage 31 auslaufende Gebinde laufen direkt in die Gruppierstation 34 ein, wodurch sich eine vorteilhafte Verfahrensintegration ergibt.

Wiederum eine weitere nicht dargestellte Ausführungsform kann darin bestehen, dass die Umreifungsapplikationsköpfe in der Gruppierstation 34 einer Palettiermaschine 32 integriert sind. Vor, während oder unmittelbar nach dem Umreifen der Gebinde werden diese dann gemäß einem vorgegebenen Lagenschema gruppiert bzw. in die gewünschte Position auf dem Transportband 16 gebracht. Es ist also auch denkbar, dass bei einer direkten Blockung in einer Verpackungsanlage die Gruppierstation 34 mit integrierten Umreifungsapplikationsköpfen zwei Anwendungen vollzieht, nämlich das Herstellen von Gebinden und das Gruppieren von Gebinden zu einer palettierfähigen Lage.

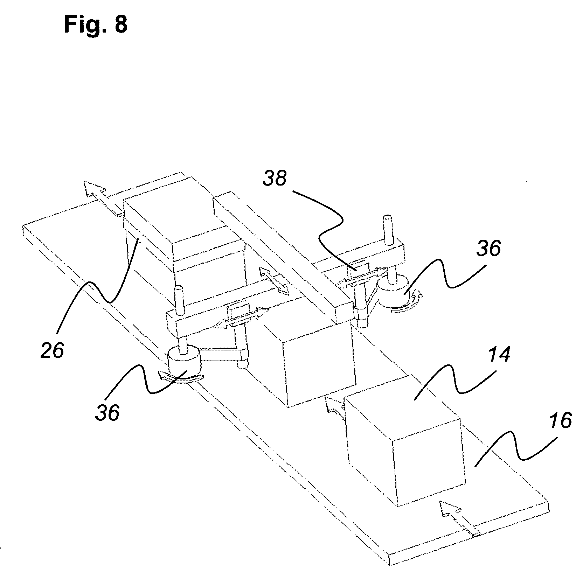

Eine weitere Alternative zur dargestellten Maschinentechnik kann darin bestehen, dass sich die Umreifungsspulen 36 in ortsfester Lage befinden, wie dies in Fig. 8 dargestellt ist. Hierbei sind je zwei separate Bänder mit Vorratsspulen 36 so angeordnet, dass diese in der Mitte verschweisst werden, so dass sich ein horizontales Band 26 quer zur Laufrichtung der Gebinde 14 spannt. In dieses gespannte Band 26 fährt dann kontinuierlich das Gebinde 14 ein und zwar so weit, bis sich die Hinterkante der Formation in der Flucht mit der ehemals geraden Bandlinie befindet. Die Bewegung der Gebindeformation 14 in Laufrichtung erzwingt dadurch eine Weiterförderung der Bänder 26 aus ihren Vorratspulen 36, so dass die Formation 14 nun von drei Seiten umschlossen ist. Es kann auch vorteilhaft sein, dass die Spulen 36 über einen eigenen Antrieb verfügen und bei entsprechender Signalgabe (z.B. Lichtschranke meldet Vorderkante Gebinde läuft ein) von sich aus den geforderten Bandbedarf aktiv zur Verfügung stellen, so dass die Spannkräfte auf die Formation im Bewegungszeitraum minimiert werden können. Wenn das Gebinde 14 von drei Seiten mit dem Band 26 umschlossen ist, bewegen sich die beiden Verschlussschlitten 38, die links und rechts neben der Verfahrlinie der Gebinde 14 angeordnet sind, in einem Arbeitshub aufeinander zu. Gleichzeitig muss nun das Portal, an dem die Schlitten 38 ihre Schließbewegung in y-Richtung durchführen, in Laufrichtung x mit dem Gebinde 14 mitfahren, um einen kontinuierlichen Durchlauf zu ermöglichen. Die Verschlussschlitten 38 spannen das Band 26 um die Formation und verschließen es. Gleichzeitig werden die Bandenden abgetrennt und verbunden, so dass wieder ein gerades Band für ein nächstes Gebinde zur Verfügung steht. Das Portal mit den Verschlussschlitten 38 fährt entgegen der Laufrichtung in den Ausgangszustand zurück.

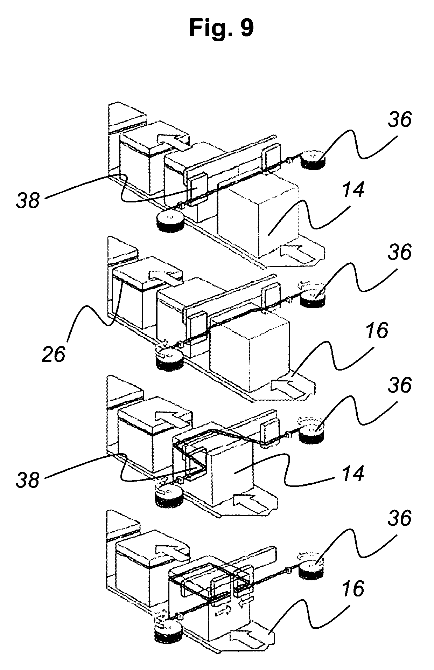

Die aufeinander folgenden Verfahrensschritte sind in der Darstellung der Fig. 9 nochmals von oben nach unten folgend dargestellt.

Je nach geforderter Leistung können die Behälterformationen, die parallel umreift werden sollen, durch Zuführung von zwei, drei oder mehr Formationen mit einer entsprechenden Zahl von Umreifungsapplikatoren umreift werden.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

### Bezugszeichenliste:

- 10: Einteilsystem
- 12: Transportband
- 14: Gebinde, Gebindeformation
- 16: Transportband
- 18: Umreifungszone
- 20: Umreifungsmodul
- 22: Rahmen, Rahmengestell
- 24: Umreifungsapplikator, Umreifungskopf
- 26: Band, Umreifung
- 28: Umreifungseinheit, Umreifungseinrichtung
- 30: Verpackungsanlage
- 31: Umreifungsanlage
- 32: Palettiermaschine
- 34: Gruppierstation
- 36: Umreifungsspule
- 38: Verschlussschlitten

## Patentansprüche

1. Verfahren zur Herstellung von Gebinden (14) aus jeweils wenigstens zwei miteinander verbundenen Artikeln, die mit einer horizontal um die Außenseiten der Artikel durch wenigstens ein einzelnes Band gebildeten gespannten Umreifung (26) zusammengehalten werden, die während eines ununterbrochenen Förderprozesses um die Artikel gelegt und anschließend fixiert wird, wobei
- für das Verfahren eine Umreifungsanlage vorgesehen ist, welche aus mehreren Umreifungsmodulen (20) besteht, wobei ein erste Umreifungsmodul (20) eine Formationsreihe umreift und eine zweite oder n-te Formationsreihe durchlaufen lässt und wobei die zweite oder n-te Formationsreihe durch ein zweites oder n-tes Umreifungsmodul (20) umreift wird, wobei
- nach dem Eintritt einer Behälterformation (14) in ein Umreifungsmodul (20) ein Umreifungsapplikator (24) mit seinen Achsen (X, Z) über die jeweilige Behälterformation (14) fährt, sich mit der X-Achse auf eine Fördergeschwindigkeit eines Transportbandes (16) synchronisiert, sich über die Z-Achse auf das Umreifungsniveau absenkt,
- während der Umreifungsapplikator (24) mit der Gebindeformation (14) mitfährt, die Behälterformation (14) mit dem wenigstens einen um die Außenseiten der Artikel gespannten und anschließend unter Vorspannung an seinen Enden verbundenen Band umreift.

2. Verfahren nach Anspruch 1, bei dem die Umreifung (26) durch ein, zwei oder mehr Bänder aus Seilmaterial, Draht, Kunststoff, Metall, Papier oder aus einem Verbundmaterial gebildet wird, die an ihren Enden verklebt, verschweißt, verklammert, verknotet oder anderweitig verbunden werden.

3. Verfahren nach Anspruch 1 oder Anspruch 2, bei dem die Umreifung (26) von oben über die auf einer Horizontalfördereinrichtung (16) stehenden und in horizontaler Richtung bewegten Artikel geschobenen und sich synchron mit der Vorschubgeschwindigkeit der Horizontalfördereinrichtung (16) mitbewegenden Umreifungseinrichtung (28) aufgebracht wird.

4. Verfahren nach Anspruch 3, bei dem die Umreifungseinrichtung (28) einen Portal- oder Knickarmroboter mit Umreifungskopf (24) umfasst, der beim Aufbringen der Umreifung (26) in vertikaler Richtung über die Artikel bewegt und gleichzeitig in horizontaler Förderrichtung der Artikel mit diesen mitbewegt wird.

5. Verfahren nach Anspruch 3 oder 4, bei dem die Umreifungseinrichtung (28) die als Gebinde (14) verbundenen Artikel nach dem Aufbringen der Umreifung (26) auf der Oberfläche der Horizontalfördereinrichtung (16) zur Ausrichtung gegenüber anderen Gebinden (14) und zur anschließenden Ausbildung von Palettenlagen und/oder zur Vorbereitung einer nachfolgenden Palettierung verschiebt oder dreht.

6. Verfahren nach einem der Ansprüche 1 bis 5, bei dem während oder nach dem Aufbringen der Umreifung (26) ein Tragegriff an der Außenseite des Gebindes (14) und/oder an den Umreifungen (26) aufgebracht und fixiert wird.

7. Vorrichtung zur Handhabung, Förderung, Verpackung und/oder Palettierung von Artikeln, die wenigstens eine Horizontalfördereinrichtung (16) zur kontinuierlichen Beförderung der Artikel, eine Vorrichtung zur Bildung von Gebinden (14) aus wenigstens zwei gruppierten und miteinander verbundenen Artikeln sowie eine nachgeordnete Gruppiervorrichtung (34) zur Ausrichtung der Gebinde (14) gegenüber anderen Gebinden (14) und zur anschließenden Ausbildung von Palettenlagen und/oder zur Vorbereitung einer nachfolgenden Palettierung umfasst, wobei die Vorrichtung zur Bildung von Gebinden eine Umreifungseinrichtung (28) zur Aufbringung einer horizontal um die Außenseiten von wenigstens zwei miteinander zu verbindenden Artikel gespannten Umreifung (26) umfasst, und dass die Umreifungseinrichtung (28) der Horizontalfördereinrichtung (16) und/oder der nachfolgenden Gruppiervorrichtung (34) zugeordnet oder integraler Bestandteil der Horizontalfördereinrichtung (16) und/oder der Gruppiervorrichtung (34) ist, **dadurch gekennzeichnet, dass** mehrere Umreifungsmodule (20) vorgesehen sind, wobei ein erstes Umreifungsmodul (20) zum Umreifen einer ersten Formationsreihe ausgebildet ist und wobei ein zweites oder n-tes Umreifungsmodul zum Umreifen einer zweiten oder n-ten Formationsreihe ausgebildet ist.

8. Vorrichtung nach Anspruch 7, bei der die Umreifungseinrichtung (28) einen Portal- oder Knickarmroboter mit Umreifungskopf (24) umfasst, der beim Aufbringen der Umreifung (26) in vertikaler Richtung über die Artikel bewegbar und gleichzeitig in horizontaler Förderrichtung der Artikel mit diesen mitbewegbar ist.

## Claims

1. Method for making packs (14) of in each case at least two coupled articles which are held together by a strapping means (26) wherein said strapping means is arranged horizontally and stretched onto the outer surfaces of the articles, wherein said strapping means is laid around the articles during a continuous conveying process and fixed afterwards wherein
- for the method a strapping unit is provided which consists of a plurality of strapping modules (20), wherein a first strapping module (20) straps a formation line and allows a second or umpteen formation line to pass through and wherein the second or umpteen formation line is strapped by a second or umpteen strapping module (20), wherein
- after entry of a container formation (14) into a strapping module (20), moving the strapping applicator (24) with its axes (X, Z) over the respective container formation (14), synchronizing the strapping applicator with the X axis to the feeding speed of the conveyor (16), lowering the strapping applicator via the Z axis onto the strapping level,
- while the strapping applicator (24) moves with the pack formation (14), the strapping applicator (24) straps the container formation (14) with the at least one strapping means stretched around the outer surfaces of the articles and afterwards fixed on each end in a pre-stressed state.

2. Method according to claim 1 wherein the strapping means (26) is formed by one, two or more straps made of rope material, wire, polymer, metal, paper or a composite material, which are fixed on their ends by gluing, welding, cramping, knotting or other.

3. Method according to claim 1 or claim 2 wherein the strapping means (26) is applied onto the articles from above, wherein said articles are positioned on a horizontal conveying means (16) and are moved in a horizontal direction, and applied by the strapping unit wherein said strapping means moves synchronically with the feeding speed of the strapping unit and the horizontal conveying means (16).

4. Method according to claim 3 wherein the strapping unit (28) comprises a gantry robot or buckling-arm robot with a strapping head (24) moving during the application of the strapping means (26) in a vertical direction over the articles and simultaneously moving horizontally in the conveying direction of the articles with said articles.

5. Method according to claim 3 or 4 wherein the strapping unit (28) shifts or rotates the articles that form the packs (14) after the application of the strapping means (26) onto the surface area of the horizontal conveyor (16) for arranging the articles opposite to other packs (14) and for the subsequent making of pallet layers and/or for preparing a palletizing afterwards.

6. Method according to any one of claims 1 to 5 wherein a carrier handle is applied and fixed onto the outer surface of the pack (14) and/or onto the strapping means (26) during or after the application of the strapping means (26).

7. Device for handling, conveying, packing and/or palletizing articles, wherein said device comprises at least one horizontal conveying means (16) for continuously conveying articles, a device for making packs (14) of at least two grouped and coupled articles as well as a subsequent grouping device (34) for arranging the packs (14) opposite to other packs (14) and for the subsequent making of pallet layers and/or for the preparation of a subsequent palletizing, wherein the device for making packs comprises a strapping unit (28) for the application of a strapping means (26) wherein said strapping means is spun horizontally around the outer surfaces of the at least two articles to be coupled together, and that the strapping unit (28) is assigned to the horizontal conveying means (16) and/or to the subsequent grouping device (34), or is an integral part of the horizontal conveying means (16) and/or of the grouping device (34), **characterized in that** a plurality of strapping modules (20) is provided/, wherein a first strapping module (20) is provided for strapping a first formation line and wherein a second or umpteen strapping module is provided for strapping a second or nth formation line.

8. Device according to claim 7 wherein the strapping unit (28) comprises a gantry robot or buckling-arm robot with a strapping head (24) which moves in a vertical direction over the articles during the application of the strapping means (26) and simultaneously moves horizontally in the conveying direction of the articles with said articles.

## Revendications

1. Procédé de production de multipacks (14) chacun à partir d'au moins deux articles reliés entre eux qui sont maintenus ensemble par un cerclage (26) qui est tendu autour des faces extérieures des articles et formé par au moins une bande unique et qui est posé autour des articles et ensuite fixé durant un processus de transport ininterrompu, dans lequel
- une installation de cerclage est prévue pour le procédé, qui se compose d'une pluralité de modules de cerclage (20), un premier module de cerclage (20) cerclant une rangée de formation et faisant passer une deuxième ou n-ième rangée de formation, et ladite deuxième ou n-ième rangée de formation étant cerclée par un deuxième ou n-ième module de cerclage (20), dans lequel,
- après qu'une formation de récipients (14) est entrée dans un module de cerclage (20), un applicateur de cerclage (24) passe par ses axes (X, Z) sur la formation de récipients (14) respective, se synchronise avec l'axe X sur une vitesse de transport d'une bande transporteuse (16), s'abaisse via l'axe Z au niveau de cerclage,
- pendant que ledit applicateur de cerclage (24) se déplace conjointement avec la formation multipack (14), il cercle la formation de récipients (14) de ladite au moins une bande tendue autour des faces extérieures des articles et reliée ensuite sous tension initiale à ses extrémités.

2. Procédé selon la revendication 1, dans lequel le cerclage (26) est constitué par une, deux bande(s) ou plus en matériau de corde, en fil, en matière plastique, en métal, en papier ou en un matériau composite, qui sont collées, soudées, agrafées, nouées ou reliées d'une autre manière à leurs extrémités.

3. Procédé selon la revendication 1 ou la revendication 2, dans lequel le cerclage (26) est appliqué par l'intermédiaire d'un dispositif de cerclage (28) qui est enfilé d'en haut sur les articles placés debout sur un dispositif de transport horizontal (16) et déplacés dans la direction horizontale, et qui se déplace conjointement et en synchronisme avec la vitesse d'avance du dispositif de transport horizontal (16).

4. Procédé selon la revendication 3, dans lequel le dispositif de cerclage (28) comprend un robot portique ou à bras articulé ayant une tête de cerclage (24) qui, lorsque le cerclage (26) est appliqué, est déplacée dans la direction verticale sur les articles et est, en même temps, déplacée conjointement avec les articles dans la direction de transport horizontale de ceux-ci.

5. Procédé selon la revendication 3 ou 4, dans lequel le dispositif de cerclage (28), après avoir appliqué le cerclage (26), déplace ou tourne les articles reliés en tant que multipack (14) sur la surface du dispositif de transport horizontal (16) pour l'orientation par rapport à d'autres multipacks (14) et pour la formation subséquente de couches de palette et/ou pour la préparation d'une palettisation subséquente.

6. Procédé selon l'une quelconque des revendications 1 à 5, dans lequel, durant ou après l'application du cerclage (26), une poignée de transport est appliquée et fixée sur la face extérieure du multipack (14) et/ou sur les cerclages (26).

7. Dispositif de manipulation, de transport, d'emballage et/ou de palettisation d'articles, qui comprend au moins un dispositif de transport horizontal (16) destiné à transporter en continu les articles, un dispositif de formation de multipacks (14) à partir d'au moins deux articles groupés et reliés entre eux, ainsi qu'un dispositif à grouper (34) disposé en aval et destiné à orienter les multipacks (14) par rapport à d'autres multipacks (14) et à former ensuite des couches de palette et/ou à préparer une palettisation subséquente, ledit dispositif de formation de multipacks comprenant un dispositif de cerclage (28) destiné à appliquer un cerclage (26) tendu horizontalement autour des faces extérieures d'au moins deux articles à relier entre eux, et que ledit dispositif de cerclage (28) est associé au dispositif de transport horizontal (16) et/ou au dispositif à grouper (34) disposé en aval ou fait partie intégrante du dispositif de transport horizontal (16) et/ou du dispositif à grouper (34), **caractérisé par le fait que** plusieurs modules de cerclage (20) sont prévus, un premier module de cerclage (20) étant conçu pour cercler une première rangée de formation et un deuxième ou n-ième module de cerclage étant conçu pour cercler une deuxième ou n-ième rangée de formation.

8. Dispositif selon la revendication 7, dans lequel le dispositif de cerclage (28) comprend un robot portique ou à bras articulé ayant une tête de cerclage (24) qui, lorsque le cerclage (26) est appliqué, peut être déplacée dans la direction verticale sur les articles et peut, en même temps, être déplacée conjointement avec les articles dans la direction de transport horizontale de ceux-ci.
